# EUROPEAN PATENT APPLICATION

(11) **EP 2 719 282 A1**
(43) Date of publication of application: **16.04.2014**
(21) Application number: 13188484.3
(22) Date of filing: 14.10.2013
(51) Int. Cl.: A21C 7/02, A21C 11/02, A21C 3/06

(54) **Forming device for fresh pasta**

(30) Priority: 15.10.2012 IT RM20120488
(71) Applicant: Zindo S.r.L., 70051 Barletta , BT (IT)
(72) Inventor: Zingrillo, Raffaele Ruggiero, 70051 Barletta BT (IT)
(74) Representative: Papa, Elisabetta

(57) **Abstract**

A machine (100) for producing fresh pasta with a so-called "*csiga*" format, which comprises a forming device (1) apt to receive as inlet a plurality of small pieces of mixture, such device in turn comprising:
- a revolving cylindrical roller (3); and
- a fixed main body (2), in turn formed by a shaped member (23) facing the roller (3) and having a profile (231) complementary to the one of the latter,
the whole arrangement being so that between the roller (3) and the shaped member (23) a forming compartment (230) results to be defined, wherein, upon use, the roller (3) drags the small pieces of mixture coming from one or more channels (22) to roll (Fig. 3A).

## Description

### Technical field of the invention

The present invention relates to a forming device for fresh pasta, in particular for a so-called *"csiga"* pasta format.

### Background

As it is known, there was a time when some types of fresh pasta, such as for example known regional specialities of Puglia such as "orecchiette", "cavatelli" and "gnocchetti", were produced only manually. Nowadays, with the enlargement of markets and the growing request of such typical products, the production is performed even with industrial systems. In particular, different machine types are known which, starting from the mixture, are able to provide as output the fresh pasta of the wished format with good or optimum organoleptic properties.
Such machines typically comprise, in sequence, a hopper inletting the mixture or the base ingredients, one or more sewer for processing and canalizing the mixture itself and a screw associated to a knife tool which, jointly, reduce the mixture in single small pieces, each one destined to implement one element of fresh pasta. In particular, downwards the cutting, the small pieces - still formless or substantially cylindrical - are conveyed on a forming tool giving each small piece the wished end format.
A machine of this type is described, for example, in the Italian utility model application Nr. BA2002U000023 in the name of the same applicant.
DE 1073 412 describes a machinery based upon a shaft actuating in rotation a cylindrical surface. The mixture is fed between such surface and a pre-forming member constituted by two converging plane walls defining a forming compartment with substantially pyramidal geometry.
IT RM2010A000076, in the name of the same applicant, describes a forming tool based upon a roller and on a contrast member with plane walls.

Machines similar to those just described are able to provide, as inlet to the forming tool, small pieces of mixutre with shape wound like a small shell.

However, the actually available forming devices do not allow reproducing, or obtaining in satisfying way, some specific pasta formats.

### Summary of the invention

Based upon what illustrated above, the technical problem placed and solved by the present invention is to provide a forming device allowing obviating the drawbacks mentioned above with reference to the known art, allowing producing automatically one specific format of fresh pasta, the so-called *"csiga",* which will be described later.
The above-mentioned problem is solved by a forming device according to claim 1.
Preferred features of the present invention are present in the claims depending from the same.

The present invention provides some relevant advantages. The main advantage consists in that the forming device of the invention allows obtaining the above-mentioned so-called "*csiga*" format, which will be described in detail shortly, in a mechanically simple way and with an optimum reproduction of the wished shape.

Other advantages, features and use modes of the present invention will result evident from the following detailed description of some embodiments, shown by way of example and not with limitative purpose.

### Brief description of the figures

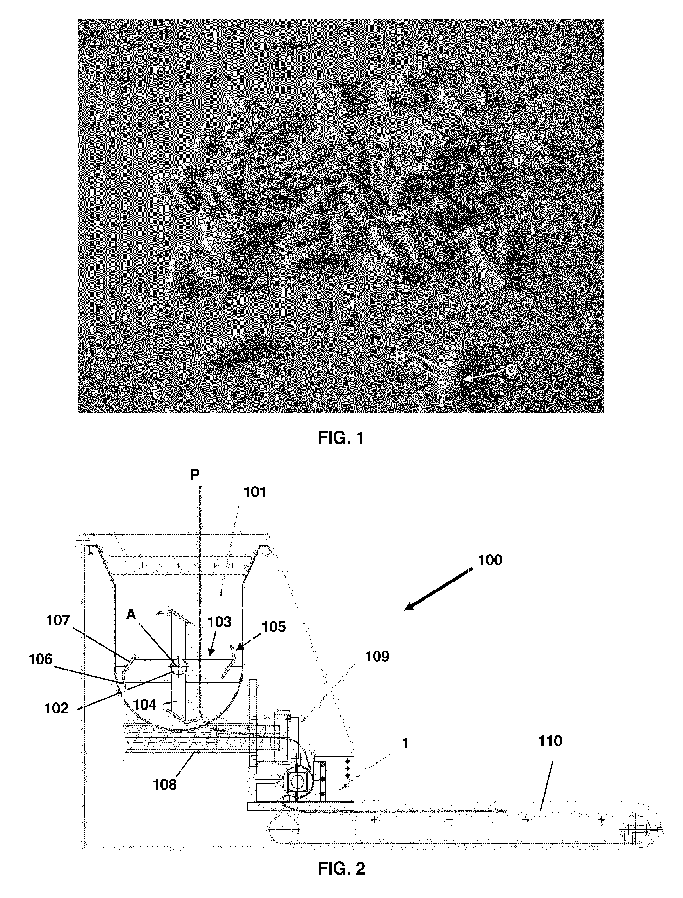

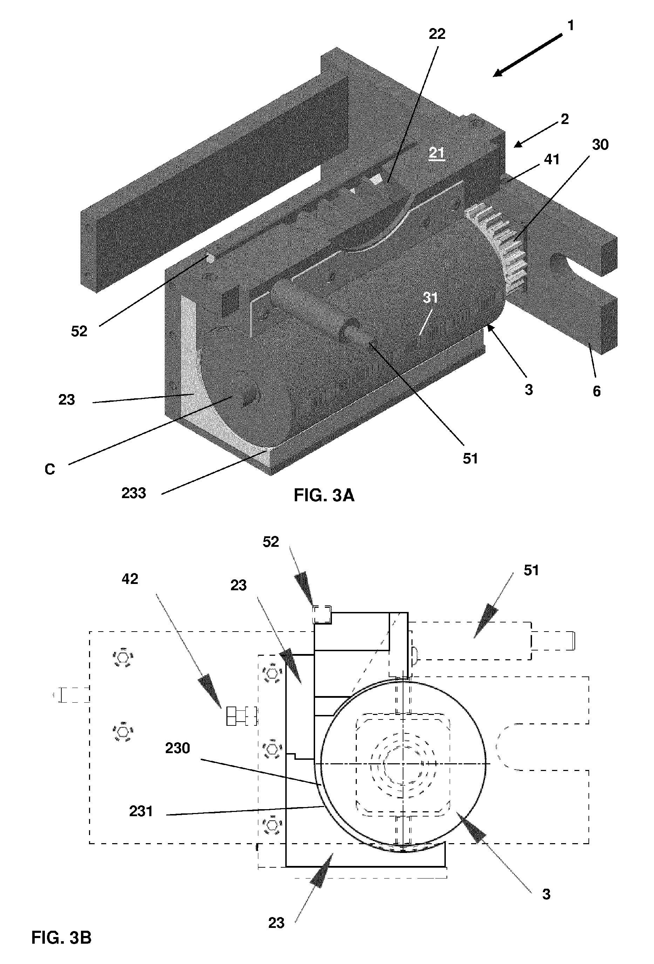

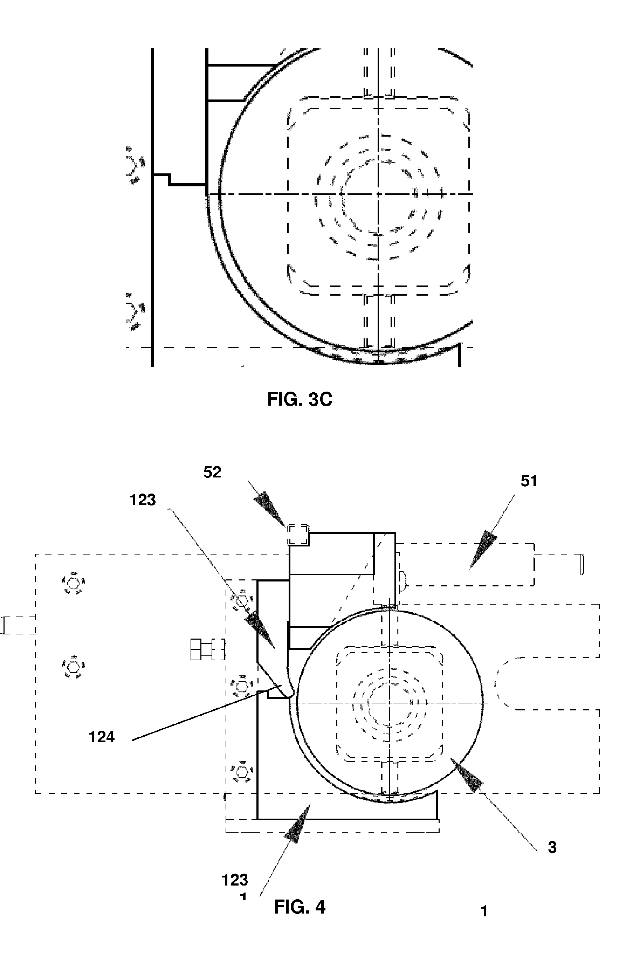

The figures of the enclosed drawings will be referred to, wherein:
■ Figure 1 is a perspective view of some examples of a fresh pasta format called "*csiga*";
■ Figure 2 is a side view, partially in transparency, of part of a machine for producing fresh pasta comprising a forming device according to a preferred embodiment of the present invention;
■ Figures 3A and 3B show the forming device of Figure 2, in front perspective and in a schematic side representation, respectively;
■ Figure 3C shows an enlarged detail of the forming device of Figure 3B, illustrating the several phases for shaping a mixture small piece; and
■ Figure 4 is a schematic side representation of a variant of the forming device of Figure 2.

### Detailed description of preferred embodiments

By initially referring to Figure 1, the fresh pasta format obtainable with the forming device according to the invention will be firstly described.
As said above, such format is called "*csiga*"*.* As it can be appreciated in Figure 1, each example of fresh pasta G of the above-mentioned format has a substantially elongated and long and slender shape, in particular slightly "bellied" at the centre. Such example G is obtained under the shape of a sheet wrapped on itself and has cross rulings R.

By now referring to Figure 2, a machine for producing fresh pasta comprising a forming device according to a preferred embodiment of the invention is designated as a whole with 100. The forming device of such embodiment herein is designated as a whole with 1.
The machine 100 comprises a kneading basin (not shown) wherein a kneading shaft can rotate. Both the basin and the shaft can be of known type.
The mixture which has formed in the kneading basin outgoes from the bottom of the latter and it is transported in a sewer 108 or equivalent means.
The sewer 108 feeds the mixture to an extruding block 109 which, according to modes known in the art, produces small pieces of fresh pasta thereto it then gives the wished end shape. Preferably, the extruding block 109 is of the type with bar or cylindrical extruder made of bronze.
In the present example, it is provided that the extruding block produces as outlet small pieces of mixture with shape wrapped like a small shell.
From the extruding block 109 the small pieces of mixture enter the forming tool 1 which will be described shortly.
The examples of shaped pasta in the forming tool 1 are then fed by means of a conveyor 110 towards the packaging or additional working and/or drying phases.
The conveyor 110, in this example, has a substantially horizontal development and it is of the carpet-like type or the type like a rotating conveyor belt actuated by chain.
The line P in Figure 2 designates the path followed - within the machine 100 - by the ingredients, by the subsequent mixture formed therewith and by the small pieces of mixture, initially "raw" pieces, then shaped according to the wished format.

As said above, the machine 100 is equipped with a forming device 1 apt to give to the small pieces of mixture a wished shape, and specifically the so-called "*csiga*"-like shape shown in Figure 1.
By referring now to Figures 3A and 3B, the forming device 1 mainly comprises a fixed main body - or frame - 2 and a roller 3 revolving with respect to the main body 2.
The main body 2, in turn, comprises an inlet member 21 bearing one or a plurality of openings or channels 22 to allow the passage of the small pieces of mixture from the extruding block 109 towards the roller 3.
Advantageously, several openings, or channels, 22 are provided, each one having an elongated shape. Preferably, the openings 22 are arranged like rays, extending according to mutually converging directions.
In the present example, means for supplying a continuous air jet or blow at the inlet of the small pieces of mixture in the device 1, that is at the openings or channels 22, are further provided. Such blow inside the openings or channels 22 is useful to improve processing, in particular to make more fluid the feeding of the small pieces of mixture towards the roller 3.
In the present embodiment, such supplying means comprises an air intake 51 in communication with a supplying small tube 52 placed at the openings 22.
The main body 2 comprises then a shaped member 23 integrated or integral with the inlet member 21 and facing the roller 3. As it will be clarified shortly, the shaped member 23, by interacting with the roller 3, plays a function of device for "rolling" small pieces of mixture in the wished wound shape.
In the present example, the shaped member 23 has a substantially "L"-like shape, with an inner profile 231 facing the roller 3 complementary to the profile of the latter and in particular having a substantially cylindrical geometry.
A plurality of grooves 233 is made on such profile 231, apt to produce corresponding rulings R on each small piece of mixture. In the present example, such grooves 233 have constant pitch and depth.
The roller 3 has a substantially cylindrical geometry and it is revolving around a symmetry axis C. In Figure 3A a member 30 for transmitting the motion can be seen, in particular a gear, from a (not shown) engine to the roller 3 itself. Since such members for generating and transmitting the motion are known on themselves one will not dwell upon the description thereof.
The roller 3 has a plurality of grooves 31, apt to produce corresponding rulings R on each piece of mixture too. In the present example even the grooves 31 have constant pitch and depth.
Between the roller 3 and the shaped member 23 a forming compartment 230 results to be defined wherein, upon use, the roller 3 drags the small pieces of mixture to roll.
Preferably, the forming compartment 230 extends for about one fourth of measurement of roller 3.
Preferably, the forming compartment 230 has a substantially "L"-like development following the above-mentioned preferred form of the shaped member 23.

As said above, the forming compartment 230 is defined by surfaces, or walls, respectively faced of the roller 3 and of the shaped member 23 having complementary cylindrical profiles. Therefore, the forming compartment 230 has a cylindrical geometry too, and in particular it is shaped like a substantially torus field.
Based upon the described arrangement, the forming device 1 provides as outlet examples of fresh pasta G having the above-mentioned elongated and wound convex body, equipped with the above-mentioned rulings R.
In the detail of Figure 3C the progressive shaping of a small piece of mixture is shown, with shape wound like a small shell, rolling in the forming department 230, by assuming the above-mentioned rolled and ruled shape.
Furthermore, the forming device 1 comprises means for adjusting the sizes - and in particular the thickness - of the forming department 230. In the present example, such means allows adjusting the distance between the roller 3 and the shaped member 23 and it comprises one or more adjusting screws, in particular in the present example horizontal setting screws 41 and vertical setting screws 42.
Such adjusting means allows then a double possibility of varying said distance, in particular according to two mutually orthogonal directions.
The thickness and the specific proportions of the implemented pasta example depend upon such adjustment.
The forming device 1 completes then with additional frame members, in particular side walls, only one thereof is shown in Figure 3A and it is designated with 6.
Furthermore, for the cleaning and efficiency of the roller 3 during the processing, on the forming device 1 a scraper can be provided useful to the removal of mixture fragments which could deposit inside the grooves 31.

Figure 4 shows an embodiment variant of the forming device which will be described only with reference to the members differentiating from what already illustrated above with reference to the previous figures.
In particular, in the shown example the shaped member, herein designated with 123, at the mouth of the forming compartment 230, has a projecting profile 124 projecting towards the roller 3 and which is apt to thin the small pieces of mixture. This variant is useful in case the small pieces of mixture fed to the forming device have not the shape of small shells, as in the previous example, on the contrary they appear substantially formless or generally cylindrical.

The present invention has been sofar described by referring to preferred embodiments. It is to be meant that other embodiment may exist belonging to the same inventive core, as defined by the protection scope of the herebelow reported claims.

## Claims

1. A forming device (1) to be used in a machine (100) for producing fresh pasta with a wished format, in particular a so-called *"csiga"* format, which device (1) is apt to receive as inlet a plurality of small pieces of mixture and it comprises:
- a revolving roller (3); and
- a fixed main body (2), in turn comprising a shaped member (23) facing said roller (3) and having a profile (231) complementary to the one of the latter, wherein said roller (3) and said shaped member (23) have complementary profiles with substantially cylindrical geometry,
the whole arrangement being so that between said roller (3) and said shaped member (23) a forming compartment (230) results to be defined, wherein, upon use, the roller (3) drags the small pieces of mixture to be rolled, the forming device (1) providing as outlet examples of fresh pasta having an elongated and rolled convex body (G).

2. The forming device (1) according to claim 1, wherein said main body (2) further comprises an inlet member (21) bearing one or a plurality of openings or channels (22) in order to allow the passage of the small pieces of mixture towards said roller (3).

3. The forming device (1) according to the previous claim, wherein said inlet member (21) has a plurality of openings or channels (22) and wherein said openings or channels (22) have each one an elongated shape and a preferably ray-like arrangement, extending according to mutually converging directions.

4. The forming device (1) according to anyone of the previous claims, comprising means (51, 52) for supplying an air jet at the inlet of the small pieces of mixture, preferably at said one or more openings or channels (22).

5. The forming device (1) according to anyone of the previous claims, wherein said forming compartment (230) extends for about one fourth of measurement of said roller (3).

6. The forming device (1) according to anyone of the previous claims, wherein said shaped member (123), at the mouth of said forming compartment (230), has a projecting profile (124) projecting towards said roller (3) and which is apt to thin the small pieces of mixture.

7. The forming device (1) according to anyone of the previous claims, comprising means (41, 42) for adjusting the sizes of said forming compartment (230), in particular means for adjusting the distance between said roller (3) and said shaped member (23), said means preferably comprising one or more adjusting screws.

8. The forming device (1) according to the previous claim, wherein said adjusting means (41, 42) allows a double possibility of varying said distance, in particular according to two mutually orthogonal directions.

9. The forming device (1) according to anyone of the previous claims, wherein said roller (3) and/or said shaped member (23) have a plurality of grooves (31, 233) apt to produce corresponding rulings (R) on each small piece of mixture.

10. The forming device (1) according to the previous claim, wherein said grooves (31, 233) on said roller (3) and/or on said shaped member (23) have constant pitch and/or depth.

11. A machine for producing fresh pasta (100), comprising a forming device (1) according to anyone of the previous claims.

12. The machine (100) according to the previous claim comprising, upwards said forming device (1), a sewer (108) for feeding the small pieces of mixture towards the forming device itself (1).
